# EUROPEAN PATENT APPLICATION

(11) **EP 4 712 370 A1**
(43) Date of publication of application: **18.03.2026**
(21) Application number: 23936599.2
(22) Date of filing: 10.05.2023
(51) Int. Cl.: H04B 10/70, H04J 14/02

(54) **MULTIPLEXED COMMUNICATION SYSTEM, COMMUNICATION DEVICE, AND CONTROL METHOD FOR SAME**

(71) Applicant: NEC Corporation, Tokyo 108-8001 (JP)
(72) Inventor: YASUDA, Wakako, Tokyo 108-8001 (JP); KAWAKAMI, Tetsuo, Tokyo 108-8001 (JP)
(74) Representative: Vossius & Partner Patentanwälte Rechtsanwälte mbB
(86) International application number: PCT/JP2023/017581
(87) International publication number: WO 2024/232046

(57) **Abstract**

A multiplexed communication system that can improve wavelength utilization efficiency and simplify the structure in two-way WDM communication is provided. The system includes an optical transmission line 31 for wavelength-multiplexed transmission in a first direction from a communication device 10 to a communication device 20; and an optical transmission line 32 for wavelength-multiplexed transmission in a second direction opposite to the first direction. The communication device 10 performs: first transmission in the first direction; and first two-way communication between the communication devices 10 and 20 in relation to the first transmission. The communication device 20 performs: second transmission in the second direction; and second two-way communication between the communication devices 10 and 20 related to the second transmission. The first transmission and the second transmission use communication light of a first wavelength λ_{Q} on the optical transmission lines 31 and 32. The first and second two-way communications use communication light of a wavelength λ1c, λ2c different from the first wavelength λ_{Q} on the optical transmission lines 31 and 32.

## Description

### [TECHNICAL FIELD]

The present invention relates to a communication system that transmits a plurality of optical signals by wavelength division multiplexing (WDM), and more particularly to communication techniques between communication devices connected by a plurality of optical transmission lines.

### [BACKGROUND ART]

In recent years, with the rapid increase in communication traffic, large-capacity WDM transmission technologies have grown in importance. In particular, the Dense Wavelength Division Multiplexing (DWDM) transmission system allows multiple optical signals with different wavelengths to be simultaneously transmitted through an optical fiber, greatly expanding the transmission capacity. However, the transmission of N optical signals requires N different wavelengths. For this reason, as the number of wavelengths N increases, inter-channel interference becomes a problem, resulting in the limited number of optical signals that can be transmitted. Furthermore, as N increases, the same number of laser light sources with different wavelengths or multi-wavelength light sources becomes necessary, which inevitably leads to a more complex configuration and higher costs.

Patent Literature 1 discloses a WDM system which is applicable to quantum key distribution (hereinafter referred to as QKD). In this system, a quantum channel for transmitting very weak optical signals and classical channels for bidirectionally transmitting optical signals of normal intensity are wavelength-multiplexed. Thus, the quantum channel and the two classical channels occupy three wavelengths.

Furthermore, Patent Literature 2 discloses an information communication system in which two QKD transmission systems are implemented. As described in Patent Literature 2, the quantum and classical channels of two QKD transmission systems are wavelength-multiplexed onto the same optical fiber, thereby occupying a total of six wavelengths.

### [CITATION LIST]

### [PATENT LITERATURE]

[PTL 1] Japanese Patent Publication No. 2006-101491
[PTL 2] International Publication No. WO2016/031194

### [SUMMARY OF INVENTION]

### [TECHNICAL PROBLEM]

In the case where the number of wavelengths occupied by an optical fiber is large, the number of available wavelengths that can be multiplexed onto that optical fiber decreases, resulting in the limited number of other general communications that can be transmitted. Furthermore, with increase in number of occupied wavelengths, it becomes necessary to provide a plurality of light sources each emitting light of different wavelengths such that the number of light sources equals that of wavelengths. In particular, as described in Patent Literature 2, in a system in which two QKD transmission systems are multiplexed onto a single optical fiber, six wavelengths are occupied, and it is necessary to install the same number of transmitter and receiver pairs as the number of wavelengths in both communication devices.

It is therefore an object of the present invention to provide a multiplexed communication system, a communication device, and a control method thereof that can improve wavelength utilization efficiency and simplify the structure in two-way WDM communication.

### [SOLUTION TO PROBLEM]

According to an aspect of the present disclosure, a multiplexed communication system including a first communication device and a second communication device which are connected by a plurality of optical transmission lines, includes: a first optical transmission line for wavelength-multiplexed transmission in a first direction from the first communication device to the second communication device; and a second optical transmission line for wavelength-multiplexed transmission in a second direction from the second communication device to the first communication device, wherein the first communication device performs: first transmission in the first direction; and first two-way communication related to the first transmission between the the first communication device and the second communicaiton device, the second communication device performs: second transmission in the second direction; and second two-way communication related to the second transmission between the the first communication device and the second communicaiton device, the first transmission and the second transmission are performed using communication light of a first wavelength on the first optical transmission line and the second optical transmission line, and the first two-way communication and the second two-way communication are performed using communication light of a wavelength different from the first wavelength on the first optical transmission line and the second optical transmission line.

According to an aspect of the present disclosure, a communication device in a multiplexed communication system including two communication devices connected by a plurality of optical transmission lines, includes: a first transmitter that outputs a source signal of a first wavelength according to source information; a second transmitter that outputs a first transmission signal of a second wavelength; a third transmitter that outputs a second transmission signal of a third wavelength; a wavelength multiplexer that wavelength-multiplexes the source signal , the first transmission signal and the second transmission signal onto a first optical transmission line to transmit it as a first wavelength multiplexed signal to another communication device; a wavelength demultiplexer that demultiplexes a second wavelength multiplexed signal received from the another communication device through the first optical transmission line into a received source signal of the first wavelength, a first received signal of the second wavelength, and a second received signal of the third wavelength; a first receiver that outputs received source information from the received source signal; a second receiver that outputs first communication information from the first received signal; a third receiver that outputs second communication information from the second received signal; and a signal processor configured to perform: first two-way communication of the first communication information related to the source information between the communication device and the another communication device by the second transmitter and the second receiver; and second two-way communication of the second communication information related to the received source information between the communication device and the another communication device by the third transmitter and the third receiver.

According to an aspect of the present disclosure, a communication device in a multiplexed communication system including two communication devices connected by a plurality of optical transmission lines, includes: a first transmitter that outputs a source signal of a first wavelength according to source information; a second transmitter that outputs a transmission signal of a second wavelength; a wavelength multiplexer that wavelength-multiplexes the source signal and the transmission signal onto a first optical transmission line to transmit it as a first wavelength multiplexed signal to another communication device; a wavelength demultiplexer that demultiplexes a second wavelength multiplexed signal received from the another communication device through a second optical transmission line into a received source signal of the first wavelength and a received signal of the second wavelength; a first receiver that outputs received source information from the received source signal; a second receiver that outputs communication information from the received signal; and a signal processor configured to perform: first two-way communication of first communication information related to the source information; and second two-way communication of second communication information related to the received source information, between the communication device and the another communication device through the second transmitter and the second receiver, wherein the second transmitter performs multiplexing of first communication information related to the source information and second communication information related to the received source information, to output the transmission signal, and the second receiver demultiplexes the received signal subjected to multiplexing into third communication information related to the source information and fourth communication information related to the received source information, which are output as the communication information.

According to an aspect of the present disclosure, a control method of a communication device in a multiplexed communication system including two communication devices connected by a plurality of optical transmission lines, the communication device includes: a first transmitter that outputs a source signal of a first wavelength according to source information; a second transmitter that outputs a first transmission signal of a second wavelength; a third transmitter that outputs a second transmission signal of a third wavelength; a wavelength multiplexer that wavelength-multiplexes the source signal , the first transmission signal and the second transmission signal onto a first optical transmission line to transmit it as a first wavelength multiplexed signal to another communication device; a wavelength demultiplexer that demultiplexes a second wavelength multiplexed signal received from the another communication device through the first optical transmission line into a received source signal of the first wavelength, a first received signal of the second wavelength, and a second received signal of the third wavelength; a first receiver that outputs received source information from the received source signal; a second receiver that outputs first communication information from the first received signal; a third receiver that outputs second communication information from the second received signal; and a signal processor, the method includes: by the signal processor, performing first two-way communication of the first communication information related to the source information between the communication device and the another communication device by the second transmitter and the second receiver; performing second two-way communication of the second communication information related to the received source information between the communication device and the another communication device by the third transmitter and the third receiver.

According to an aspect of the present disclosure, a control method of a communication device in a multiplexed communication system including a pair of communication devices connected by a plurality of optical transmission lines, the communication device includes: a first transmitter that outputs a source signal of a first wavelength according to source information; a second transmitter that outputs a transmission signal of a second wavelength; a wavelength multiplexer that wavelength-multiplexes the source signal and the transmission signal onto a first optical transmission line to transmit it as a first wavelength multiplexed signal to another communication device; a wavelength demultiplexer that demultiplexes a second wavelength multiplexed signal received from the another communication device through a second optical transmission line into a received source signal of the first wavelength and a received signal of the second wavelength; a first receiver that outputs received source information from the received source signal; a second receiver that outputs communication information from the received signal; and a signal processor for generating shared information, the method includes: by the signal processor, performing multiplexing of first communication information related to the source information and second communication information related to the received source information, to output it to the second transmitter, and inputting multiplexed information from the second receiver and demultiplexing the multiplexed information into third communication information related to the source information and fourth communication information related to the received source information.

### [ADVANTAGEOUS EFFECTS OF INVENTION]

As described above, according to the present invention, it is possible to achieve improvement of wavelength utilization efficiency and structure simplification.

### [BRIEF DESCRIPTION OF DRAWINGS]

[Fig. 1] Fig. 1 is a block diagram illustrating the schematic configuration of a multiplexed system according to a first example embodiment of the present invention.
[Fig. 2] Fig. 2 is a block diagram illustrating the schematic configuration of a multiplexed system according to a second example embodiment of the present invention.
[Fig. 3] Fig. 3 is a schematic diagram illustrating the configuration of an example of transmitter-side multiplexer and receiver-side demultiplexer in the second example embodiment.
[Fig. 4] Fig. 4 is a block diagram illustrating the schematic configuration of a multiplexed system according to a third example embodiment of the present invention.
[Fig. 5] Fig. 5 is a block diagram illustrating an example of transmitter (Alice) and receiver (Bob) in a QKD system.
[FIG. 6] Fig. 6 is a schematic diagram for explaining a basic flow of the QKD system.
[Fig. 7] Fig. 7 is a block diagram illustrating the schematic configuration of continuous-variable QKD system which is applicated to each of the above-mentioned example embodiments.

### [DESCRIPTION OF EXAMPLE EMBODIMENTS]

### <Outline of example embodiments>

According to an embodiment of the present invention, a pair of communication devices performs WDM transmissions in a first direction and a second direction opposite to the first direction through two optical transmission lines, and performs a first two-way communication related to a first transmission in the first direction and a second two-way communication related to a second transmission in the second direction. The first transmission and the second transmission each occupy a first wavelength on two optical transmission lines, and the first two-way communication and the second two-way communication each occupy a wavelength different from the first wavelength on two optical transmission lines.

The number of occupied wavelengths on an optical transmission line can be reduced by using a plurality of physically separate optical transmission lines. In other words, in the case of separate optical transmission lines, different optical signals can be transmitted on the same wavelength. As the number of occupied wavelengths decreases, the number of available wavelengths increases, allowing more wavelengths to be allocated to other communications. Furthermore, since the number of occupied wavelengths is reduced, the number of light sources that output light of those wavelengths can be reduced, allowing simplified structure. This makes it possible to improve wavelength utilization efficiency and simplify the structure in two-way WDM communications.

Furthermore, a first channel of a first wavelength and a second channel of a second wavelength are wavelength-multiplexed onto the first optical transmission line. A third channel of the first wavelength and a fourth channel of the second wavelength are wavelength-multiplexed onto the second optical transmission line. A first communication device performs a first transmission over the first channel and performs a first two-way communication related to the first transmission over the second and fourth channels. A second communication device performs a second transmission over the third channel and performs a second two-way communication related to the second transmission over the second and fourth channels. In this case, first information to be transmitted through the second channel in relation to the first transmission and second information to be transmitted through the second channel in relation to the second transmission are multiplexed and transmitted. Third information to be transmitted through the fourth channel in relation to the first transmission and the fourth information to be transmitted through the fourth channel in relation to the second transmission are multiplexed and transmitted.

As configured in this way, the number of occupied wavelengths can be further reduced in WDM two-way communication, thereby reducing the number of transmitters and receivers required for two-way communication. Accordingly, wavelength utilization efficiency in two-way WDM communication can be further improved, promoting simplification of the structure.

Hereinafter, embodiments in which the multiplexed communication system according to the present invention is applied to a two-way QKD transmission system will be described in detail with reference to the drawings.

### 1. First example embodiment

### 1.1) System configuration

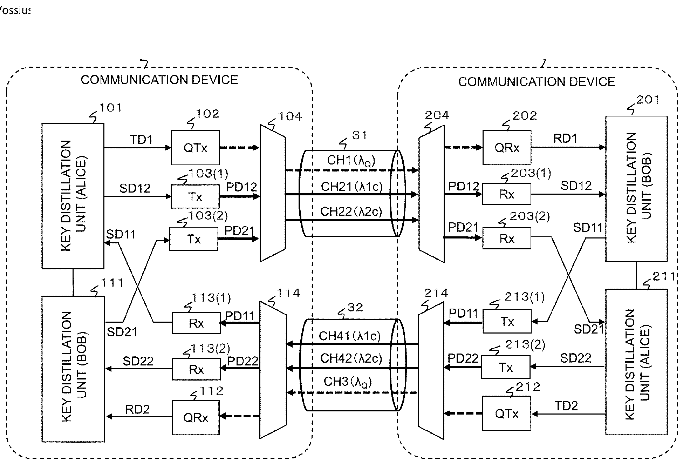

As illustrated in Fig. 1, a multiplexed communication system according to the first example embodiment of the present invention may include a pair of communication devices 10 and 20 connected by optical transmission lines 31 and 32, in which two QKD transmission systems are implemented. Here, the optical transmission line 31 is assigned to optical transmission in a first direction, and the optical transmission line 32 is assigned to optical transmission in a direction (second direction) opposite to the first direction. The first direction is the direction from the communication device 10 to the communication device 20, and the second direction is the direction from the communication device 20 to the communication device 10. Each of the optical transmission lines 31 and 32 is an optical transmission medium that transmits light of a plurality of different wavelengths. Although any type of optical transmission medium can be used, optical fibers will be used here as an example.

The communication device 10 includes: a key distillation unit 101 and a quantum unit 102; optical transmitters 103(1) and 103(2); and a wavelength multiplexer 104, on ALICE side of a first QKD transmission system. The communication device 10 also includes: a key distillation unit 111 and a quantum unit 112 on BOB side of a second QKD transmission system; optical receivers 113(1) and 113(2); and a wavelength demultiplexer 114. As will be described later, the optical transmitter 103(1) and the optical receiver 113(1) are used in the first QKD transmission system, and the optical transmitter 103(2) and the optical receiver 113(2) are used in the second QKD transmission system.

The communication device 20 includes: a key distillation unit 201 and a quantum unit 202; optical receivers 203(1) and 203(2); and a wavelength demultiplexer 204, on BOB side of the first QKD transmission system. The communication device 20 also includes: a key distillation unit 211 and a quantum unit 212; optical transmitters 213(1) and 213(2); and a wavelength multiplexer 214, on ALICE side of the second QKD transmission system. As will be described later, the optical transmitter 213(1) and the optical receiver 203(1) are used for the first QKD transmission system, and the optical transmitter 213(2) and the optical receiver 203(2) are used for the second QKD transmission system.

The quantum unit 102 of the first QKD transmission system outputs very weak light of wavelength λ_{Q} modulated according to transmission random numbers TD1. The transmission random numbers TD1 are the source of key for the first QKD transmission system, and are supplied from the key distillation unit 101 . The optical transmitter 103(1) inputs communication information SD12 from the key distillation unit 101 and converts it into an optical signal PD12 of normal intensity and wavelength λ1c. The communication information SD12 is information related to the transmission random numbers TD1 in the first QKD transmission system, and is generated in the processing such as basis reconciliation, which will be described later. The optical transmitter 103(2) inputs communication information SD21 from the key distillation unit 111 and converts it into an optical signal PD21 of normal intensity and wavelength λ2c. The communication information SD21 is information related to transmission random numbers TD2 in the second QKD transmission system described later, and is similarly generated in the processing such as basis reconciliation.

The very weak light of wavelength λ_{Q}, the optical signal PD12 of wavelength λ1c, and the optical signal PD21 of wavelength λ2c are wavelength-multiplexed by the wavelength multiplexer 104 onto the optical transmission line 31 and transmitted to the communication device 20 as wavelength-multiplexed light in the first direction. Hereinafter, the quantum channel of wavelength λ_{Q} in the first direction will be referred to as CH1, the classical channel of wavelength λ1c as CH21, and the classical channel of wavelength λ2c as CH22.

When the wavelength-multiplexed light arrives through the optical transmission line 31, the wavelength demultiplexer 204 of the communication device 20 demultiplexes the wavelength-multiplexed light into very weak light in quantum channel CH1, an optical signal PD12 in classical channel CH21, and an optical signal PD22 in classical channel CH22. The quantum unit 202 detects the very weak light that arrives through the quantum channel CH1 and outputs reception information RD1 to the key distillation unit 201. The optical receiver 203(1) receives the optical signal PD12 arriving through the classical channel CH21, and outputs communication information SD12 to the key distillation unit 201 . The optical receiver 203(2) receives the optical signal PD21 arriving through the classical channel CH22, and outputs communication information SD21 to the key distillation unit 211.

The quantum unit 212 of the second QKD transmission system outputs very weak light of wavelength λ_{Q} modulated by the transmission random numbers TD2. The transmission random numbers TD2 are a source of the key for the second QKD transmission system, and is supplied from the key distillation unit 211. The optical transmitter 213(1) inputs communication information SD11 from the key distillation unit 201 and converts it into the optical signal PD11 of normal intensity and wavelength λ1c. The communication information SD11 is information related to the transmission random numbers TD1 in the first QKD transmission system, and is generated in the processing such as basis reconciliation, which will be described later. The optical transmitter 213(2) inputs the communication information SD22 from the key distillation unit 111 and converts it into an optical signal PD22 of normal intensity and wavelength λ2c. The communication information SD22 is information related to the transmission random numbers TD2 in the second QKD transmission system described later, and is similarly generated in the processing of basis reconciliation and the like.

The very weak light of wavelength λ_{Q}, the optical signal PD11 of wavelength λ1c, and the optical signal PD22 of wavelength λ2c are wavelength-multiplexed by the wavelength multiplexer 214 onto the optical transmission line 32 and transmitted to the communication device 10 as wavelength-multiplexed light in the second direction. Hereinafter, the quantum channel of wavelength λ_{Q} in the second direction will be referred to as CH3, the classical channel of wavelength λ1c as CH41, and the classical channel of wavelength λ2c as CH42.

When the wavelength-multiplexed light arrives through the optical transmission line 32, the wavelength demultiplexer 114 of the communication device 10 demultiplexes the wavelength-multiplexed light into very weak light in quantum channel CH3, the optical signal PD11 in classical channel CH41, and the optical signal PD22 in classical channel CH42. The quantum unit 122 detects the very weak light that has arrived through the quantum channel CH3 and outputs the reception information RD2 to the key distillation unit 111. The optical receiver 113(1) receives the optical signal PD11 that has arrived through the classical channel CH41 and outputs the communication information SD11 to the key distillation unit 101. The optical receiver 113(2) receives the optical signal PD22 that has arrived through the classical channel CH42, and outputs the communication information SD22 to the key distillation unit 211.

In the present example embodiment, a one-way very-weak-light transmission system may be adopted for the pair of quantum unit 102 on the ALICE side and quantum unit 202 on the BOB side in the first QKD transmission system. Similarly, a one-way very-weak-light transmission system may be adopted for the pair of quantum unit 212 on the ALICE side and quantum unit 112 on the BOB side in the second QKD transmission system. Here, either discrete-variable QKD, which transmits single photons through quantum channels CH1/CH3, or continuous-variable QKD, which modulates and transmits the quadrature amplitude of light, may be employed.

The above-described key distillation units 101 and 111 may each be realized by executing programs on at least one processor (not shown). Similarly, key distillation units 201 and 211 may each be realized by executing programs on at least one processor (not shown).

### 1.2) System operation

The key distillation unit 101 transmits the transmission random numbers TD1 through the quantum channel CH1, and the key distillation unit 201 receives the reception information RD1. Subsequently, the key distillation units 101 and 201 perform two-way communication using the first-direction classical channel CH21 and the second-direction classical channel CH41 to sequentially perform basis reconciliation, error correction, and privacy amplification as described below.

Similarly, the key distillation unit 211 transmits transmission random numbers TD2 through the quantum channel CH3, and the key distillation unit 111 receives the reception information RD2. Subsequently, the key distillation units 111 and 211 perform two-way communication using the second-direction classical channel CH42 and the first-direction classical channel CH22 to sequentially perform basis reconciliation, error correction, and privacy amplification as described below.

In this way, a final quantum key (first shared random numbers) is generated between the key distillation unit 101 and the key distillation unit 201, and a final quantum key (second shared random numbers) is generated between the key distillation unit 211 and the key distillation unit 111. The key distillation unit 101 and the key distillation unit 111 in the communication device 10 may generate a single sequence of shared random numbers as a shared key by concatenating the first shared random numbers and the second shared random numbers under the control of the above-mentioned processor. Similarly, the communication device 20 may generate a single sequence of shared random numbers as a shared key by concatenating the first shared random numbers and the second shared random numbers under the control of a processor (not shown).

### 1.3) Advantageous effects

As described above, according to the first embodiment of the present invention, the very weak light is transmitted in the first QKD transmission system via the quantum channel CH1 of wavelength λ_{Q}, and the associated two-way communication is carried out using the classical channel CH21 of wavelength λ1c and the classical channel CH41 of wavelength λ2c. Similarly, in the second QKD transmission system, the very weak light is transmitted through the quantum channel CH3 of wavelength λ_{Q}, and the associated two-way communication is carried out using the classical channel CH42 of wavelength λ1c and the classical channel CH22 of wavelength λ2c.

In such a manner, only three wavelengths are occupied in each of the optical transmission lines 31 and 32. Accordingly, more communications by general light can be wavelength-multiplexed on each optical transmission line. Furthermore, in the communication devices 10 and 20, the two-way QKD transmission system may be constructed simply by providing light sources for three wavelengths and photodetectors for the three wavelengths. In other words, by installing optical transceivers with the same configuration in both communication devices 10 and 20, the two-way QKD transmission system can be easily constructed. As described above, according to the present example embodiment, it is possible to improve wavelength utilization efficiency and simplify the structure in the two-way WDM communication.

### 2. Second example embodiment

According to the first example embodiment described above, two classical channels are wavelength-multiplexed on each of the first and second optical transmission lines, thereby realizing two-way communication of the first and second QKD transmissions. The present invention is not limited to this structure. According to the second example embodiment of the present invention, two-way communication of the first and second QKD transmissions can be realized using a single classical channel in each optical transmission line.

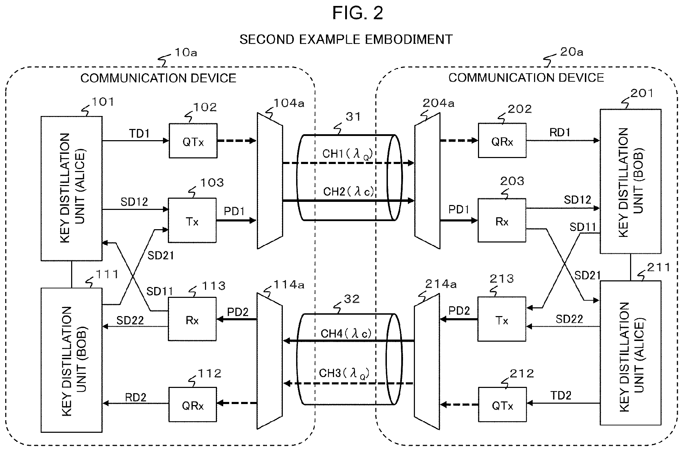

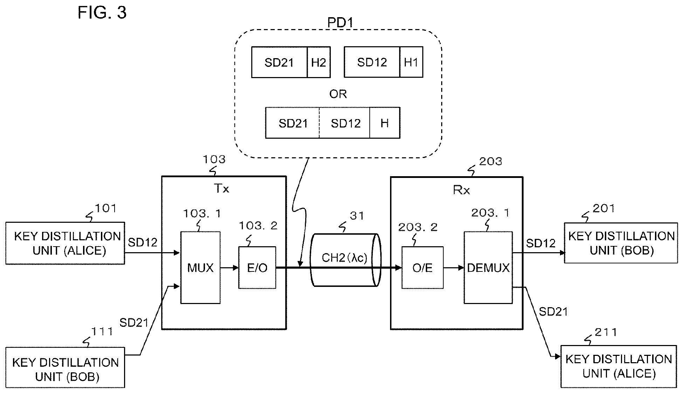

The second example embodiment of the present invention will be described in detail below with reference to Figs. 2 and 3. Blocks having the same functions as those in the first example embodiment shown in Fig. 1 are denoted by the same reference numerals and the description thereof will be simplified.

### 2.1) System

As illustrated in Fig. 2, the multiplexed communication system according to a second example embodiment of the present invention has a configuration, as in the case of the first example embodiment, such that communication devices 10a and 20a are connected by optical transmission lines 31 and 32, in which two QKD transmission systems are implemented. In this embodiment as well, the first direction is the direction from the communication device 10a to the communication device 20a, and the second direction is the direction from the communication device 20a to the communication device 10a. The optical transmission line 31 is assigned to optical transmission in the first direction, and the optical transmission line 32 is assigned to optical transmission in the second direction. Each of the optical transmission lines 31 and 32 is an optical transmission medium that transmits light of a plurality of different wavelengths, similar to the first example embodiment.

The communication device 10a includes a key distillation unit 101, a quantum unit 102, an optical transmitter 103, and a wavelength multiplexer 104a on ALICE side in the first QKD transmission system. The communication device 10a also includes a key distillation unit 111, a quantum unit 112, an optical receiver 113, and a wavelength demultiplexer 114a on BOB side in the second QKD transmission system. As will be described later, the optical transmitter 103 and the optical receiver 113 are shared by the first QKD transmission system and the second QKD transmission system.

The communication device 20a includes: a key distillation section 201 and a quantum unit 202; an optical receiver 203; and a wavelength demultiplexer 204a on the BOB side in the first QKD transmission system. The communication device 20a also includes: a key distillation unit 211 and a quantum unit 212; an optical transmitter 213; and a wavelength multiplexer 214a on the ALICE side in the second QKD transmission system. As will be described later, the optical transmitter 213 and the optical receiver 203 are shared by the first QKD transmission system and the second QKD transmission system.

The quantum unit 102 of the first QKD transmission system outputs very weak light of wavelength λ_{Q} modulated by the transmission random numbers TD1. The transmission random numbers TD1 are the source of a key for the first QKD transmission system, and is supplied from the key distillation unit 101. The optical transmitter 103 inputs communication information SD12 from the key distillation unit 101 and the communication information SD21 from the key distillation unit 111, and outputs an optical signal PD1 of normal intensity and wavelength λc. The optical transmitter 103 multiplexes the communication information SD12 and SD21 on the optical signal PD1 which can be demultiplexed. As will be described later, the communication information SD12 is information related to the transmission random numbers TD1 for the first QKD transmission system, and is generated in the processing such as basis reconciliation. The communication information SD21 is information related to the transmission random numbers TD2 for the second QKD transmission system, and is also generated in the processing such as basis reconciliation.

The very weak light of wavelength λ_{Q} and the optical signal PD1 of wavelength λc are wavelength-multiplexed onto the optical transmission line 31 by the wavelength multiplexer 104a and transmitted to the communication device 20a as wavelength-multiplexed light in the first direction. Hereinafter, the quantum channel of wavelength λ_{Q} in the first direction will be denoted as CH1, and the classical channel of wavelength λc will be denoted as CH2.

When the wavelength-multiplexed light arrives via the optical transmission line 31, the wavelength demultiplexer 204a of the communication device 20a demultiplexes the wavelength-multiplexed light into the very weak light in the quantum channel CH1 and the optical signal PD1 in the classical channel CH2. The quantum unit 202 detects the very weak light that has arrived through the quantum channel CH1 and outputs reception information RD1 to the key distillation unit 201. The optical receiver 203 performs photoelectric conversion of the optical signal PD1 arriving through the classical channel CH1, and further demultiplexes the electric signal thus obtained into communication information SD12 and communication information SD21, which are output to the key distillation units 201 and 211, respectively.

The quantum unit 212 of the second QKD transmission system outputs very weak light of wavelength λ_{Q} modulated by the transmission random numbers TD2. The transmission random numbers TD2 are the source of a key for the second QKD transmission system, and is supplied from the key distillation unit 211. The optical transmitter 213 inputs the communication information SD11 from the key distillation unit 201 and the communication information SD22 from the key distillation unit 211, and outputs the optical signal PD2 of normal intensity and wavelength λc. The optical transmitter 213 multiplexes the communication information SD11 and SD22 on the optical signal PD2 which can be demultiplexed. As will be described later, the communication information SD11 is information related to the transmission random numbers TD1 for the first QKD transmission system, and is generated in the processing such as basis reconciliation. The communication information SD22 is information related to the transmission random numbers TD2 for the second QKD transmission system, and is also generated in the processing such as basis reconciliation.

The weak light of wavelength λ_{Q} and the optical signal PD2 of wavelength λc are wavelength-multiplexed onto the optical transmission line 32 by the wavelength multiplexer 214a and transmitted to the communication device 10a as wavelength-multiplexed light in the second direction. Hereinafter, the quantum channel of wavelength λ_{Q} in the second direction will be denoted as CH3, and the classical channel of wavelength λc will be denoted as CH4.

When the wavelength-multiplexed light arrives via the optical transmission line 32, the wavelength demultiplexer 114a of the communication device 10a demultiplexes the wavelength-multiplexed light into the very weak light in the quantum channel CH3 and the optical signal PD2 in the classical channel CH4. The quantum unit 112 detects the very weak light that has arrived through the quantum channel CH3 and outputs reception information RD2 to the key distillation unit 111. The optical receiver 113 performs photoelectric conversion of the optical signal PD2 arriving through the classical channel CH4, and further demultiplexes the electric signal thus obtained into communication information SD11 and communication information SD22, which are output to the key distillation units 101 and 111, respectively.

In the present example embodiment, a one-way very-weak-light transmission system may be adopted for the pair of the quantum unit 102 on ALICE side and the quantum unit 202 on BOB side in the first QKD transmission system. Similarly, a one-way very-weak-light transmission system may be adopted for the pair of the quantum unit 212 on the ALICE side and the quantum unit 112 on the BOB side of the second QKD transmission system. Here, either discrete-variable QKD which transmits single photons through the quantum channel CH1/CH3, or continuous-variable QKD which modulates and transmits the quadrature amplitude of light, may be employed.

The optical transmitter 103/213 and the optical receiver 203/113 are capable of transmitting and receiving communication information SD through the classical channel CH2/CH4 by a multiplexing/demultiplexing method using the same wavelength, such as packet multiplexing or time-division multiplexing. The following describes an example of packet transmission from the optical transmitter 103 to the optical receiver 203. The same applies to the optical transmitter 213 and the optical receiver 113 .

As illustrated in Fig. 3, the optical transmitter 103 includes a multiplexer 103.1 and a light emitting unit 103.2. The multiplexer 103.1 generates packets from the communication information SD12 input from the key distillation unit 101 and the communication information SD21 input from the key distillation unit 111. For example, a single packet may be generated, which stores the communication information SD12 and SD21 as data in a predetermined format. Alternatively, a packet storing the communication information SD12 as data and the key distillation unit 201 as destination (H1) and a packet storing the communication information SD21 as data and the key distillation unit 211 as destination (H2) may be generated separately.

The multiplexer 103.1 outputs the packet to the light emitting unit 103.2, which converts the packet to the optical signal PD1 of wavelength λc and normal intensity. The packet is transmitted to the optical receiver 203 through the classical channel CH2.

The optical receiver 203 includes a demultiplexer 203.1 and a photodetector 203.2. The photodetector 203.2 converts the optical signal PD1 to an electrical signal via the classical channel CH2 and outputs the electrical signal to the demultiplexer 203.1. The demultiplexer 203.1 outputs the communication information SD12 to the key distillation unit 201 and the communication information SD21 to the key distillation unit 211, in accordance with the predetermined format of the header or data section of the packet.

The above-described key distillation units 101 and 111 may each be implemented by executing programs on at least one processor (not shown). Similarly, the key distillation units 201 and 211 may each be implemented by executing program s on at least one processor (not shown).

### 2.2) System Operation

The system operation according to the second example embodiment is the same as that of the first example embodiment, except for the multiplexing/demultiplexing of communication information by the optical transmitters 103/213 and optical receivers 203/113 as described above.

The key distillation unit 101 transmits the transmission random numbers TD1 through the quantum channel CH1, and the key distillation unit 201 receives the reception information RD1. Subsequently, the key distillation unit 101 and the key distillation unit 201 perform the two-way communication using: the classical channel CH2 in the first direction from the optical transmitter 103 to the optical receiver 203; and the classical channel CH4 in the second direction from the optical transmitter 213 to the optical receiver 113. After that, the key distillation unit 101 and the key distillation unit 201 sequentially perform basis reconciliation, error correction, and privacy amplification, which will be described later.

Similarly, the key distillation unit 211 transmits the transmission random numbers TD2 through the quantum channel CH3, and the key distillation unit 111 receives the reception information RD2. Subsequently, the key distillation unit 111 and the key distillation unit 211 perform the two-way communication using: the classical channel CH4 in the second direction from the optical transmitter 213 to the optical receiver 113; and the classical channel CH2 in the first direction from the optical transmitter 103 to the optical receiver 203. After that, the key distillation unit 111 and the key distillation unit 211 sequentially perform basis reconciliation, error correction, and privacy amplification, which will be described later.

In this way, a final quantum key (first shared random numbers) is generated between the key distillation unit 101 and the key distillation unit 201, and a final quantum key (second shared random numbers) is generated between the key distillation unit 211 and the key distillation unit 111. The key distillation unit 101 and the key distillation unit 111 in the communication device 10a may generate a single sequence of shared random numbers as a shared key by concatenating the first shared random numbers and the second shared random numbers under the control of the above-mentioned processor. Similarly, the communication device 20a may generate a single sequence of shared random numbers as a shared key by concatenating the first shared random numbers and the second shared random numbers under the control of a processor (not shown).

### 2.3) Advantageous effects

As described above, according to the second embodiment of the present invention, two-way communication in the first QKD transmission system and two-way communication in the second QKD transmission system are carried out through the classical channels CH2 and CH4 of the same wavelength by packet multiplexing or time division multiplexing. This results in only two wavelengths being occupied in each of the optical transmission lines 31 and 32. Accordingly, more general-light communications can be wavelength-multiplexed. Furthermore, in the communication devices 10a and 20a, the two-way QKD transmission system may be constructed simply by providing light sources for two wavelengths and photodetectors for the two wavelengths. In other words, by installing optical transceivers with the same configuration in both communication devices 10a and 20a, the two-way QKD transmission system can be easily constructed. As described above, according to the present example embodiment, it is possible to further improve wavelength utilization efficiency and achieve a further simplified structure in the two-way WDM communication.

### 3. Third example embodiment

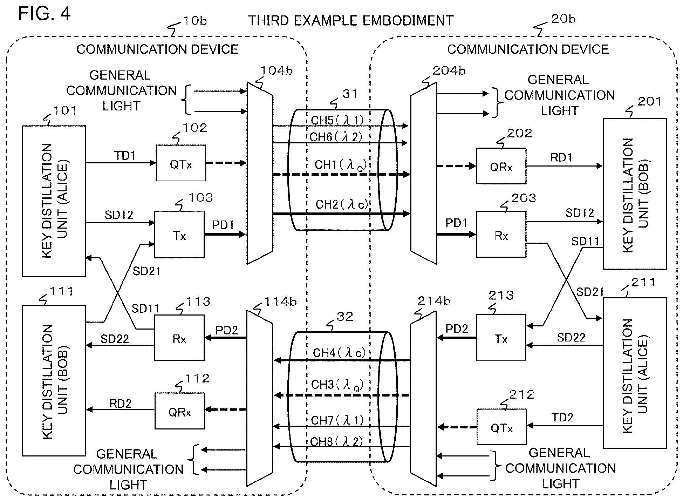

According to the first and second example embodiments described above, the number of wavelengths occupied in each of the optical transmission lines 31 and 32 can be reduced. Accordingly, more two-way channels for general communication can be allocated to the available wavelengths. Fig. 4 shows an example which can assign more wavelength channels for general communication to the multiplexed communication system of the second example embodiment described above. Hereinafter, blocks having the same functions as those in the second example embodiment shown in Fig. 2 are denoted by the same reference numerals and their description will be omitted.

Referring to Fig. 4, wavelength multiplexers 104b and 204b provided in communication devices 10b and 20b, respectively, allow wavelength division multiplexing in the first direction, which includes multiple classical channels CH5 and CH6 for general communication in addition to the quantum channel CH1 and a classical channel CH2. Similarly, wavelength multiplexers 114b and 214b provided in communication devices 10b and 20b, respectively, allow wavelength division multiplexing in the second direction , which includes multiple classical channels CH7 and CH8 for general communication in addition to the quantum channel CH3 and the classical channel CH4. Other than the configuration in which optical signals for general communication are wavelength-multiplexed, the configuration of the present example embodiment is the same as that of the second example embodiment described above. Needless to say, a plurality of two-way channels for general communication can also be wavelength-multiplexed in the multiplexed communication system according to the first example embodiment.

### 4. QKD transmission system

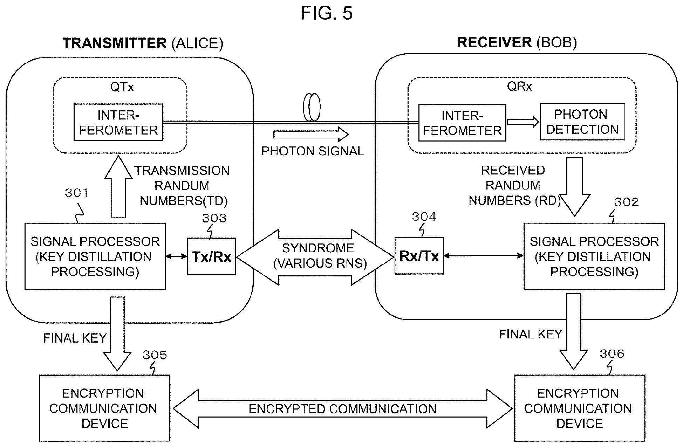

Hereinafter, an example of a QKD transmission system used in the first and second QKD transmission systems equipped in the above-mentioned example embodiment will be described with reference to Figs. 5 to 7.

Referring to Fig. 5, a general QKD transmission system includes a transmitter (ALICE) and a receiver (BOB). A quantum unit QTx on the transmitting side and a quantum unit QRx on the receiving side are connected by an optical transmission line to form an interferometer. The signal processor 301 of the transmitter (ALICE) supplies transmission random numbers TD to the quantum unit QTx. The quantum unit QTx transmits a photon signal of a single-photon level, which is modulated according to the transmission random numbers TD, to the quantum unit QRx through the quantum channel.

The quantum unit QRx detects photons from the arriving photon signal, and outputs information obtained from the detected photons as received random numbers RD to the signal processor 302. The signal processors 301 and 302 can communicate bidirectionally through classical channels via the transceivers 303 and 304. The signal processors 301 and 302 perform the key distillation processing including basis reconciliation, error correction, and privacy amplification, while exchanging communication information such as basis information and syndrome based on the transmission random numbers TD and the reception random numbers RD, which will be described below. When the transmitter (ALICE) and the receiver (BOB) share a final key in this way, encryption communication devices 305 and 306 can carry out encryption communication using the shared final key.

The above-described signal processors 301 and 302 may be implemented in the transmitter (ALICE) and the receiver (BOB), respectively, by executing programs on at least one processor in each of the transmitter and the receiver.

### <Key distillation processing>

QKD enables secure key sharing between remote locations by single-photon transmission of random numbers TD which are the source of an encryption key. Since single photons are used, it is possible to quantum-mechanically guarantee that the encryption key will not be leaked, thereby achieving high confidentiality. For this reason, it is expected to be used in encryption communications that handle highly confidential information.

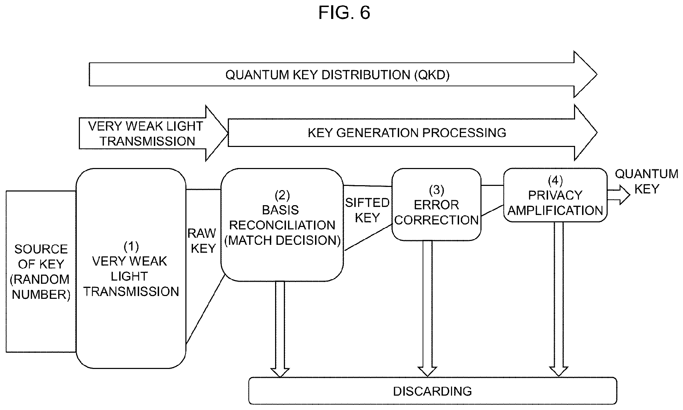

As shown in Fig. 6, QKD includes four steps: 1) very weak light transmission; 2) basis reconciliation; 3) error correction; and 4) privacy amplification.
(1) In very weak light transmission, a transmitter (ALICE) modulates an optical signal according to transmission random numbers, which is the source of a key (random numbers), and transmits very weak light obtained by attenuating the modulated light to an intensity of one photon or less, through a quantum channel. There is a high possibility that very weak light will be lost or an error will occur during transmission. Accordingly, information (raw key) received by the receiver (BOB) through the quantum channel will be part of the source of the key that has been transmitted.

There are two types of very weak optical transmission: discrete-variable QKD, which transmits single photons through the quantum channel; and continuous-variable QKD, which modulates the quadrature amplitude of light for transmission. In the discrete-variable QKD, a photon detector is used to detect the presence or absence of a photon. From the detected data, a cryptographic key can be generated (see, for example, Patent Literature 1). Accordingly, special devices such as single-photon generator and single-photon detectors are required.

In contrast, in the continuous-variable QKD, the state of the electric field of light is measured by coherent detection. From the measurement data, an encryption key is generated (see, for example, Japanese Patent Application Publication No. 2019-522394A). Since coherent detection is a technology commonly used in long-distance, high-capacity optical communications, the coherent detection can be implemented using common optical components. Therefore, the continuous-variable QKD is expected to be less costly to implement than the discrete-variable QKD. Another advantage is that wavelength multiplexing with optical signals for general communications is possible.

(2) In basis reconciliation, basis information is transmitted between the transmitter (ALICE) and the receiver (BOB) through classical channels to sift basis-matching reception information and discard other information. In this case, it is necessary for the transmitter (ALICE) and receiver (BOB) to agree on which of the bits transmitted over the quantum channel corresponds to the transmitted basis information (establishment of bit position synchronization).

(3) Error correction is performed on the sifted information (sifted key) obtained by basis reconciliation between the transmitter (ALICE) and the receiver (BOB). For example, the receiver (BOB) calculates error correction information (syndrome) from the reception information and transmits it as communication information SD to the transmitter (ALICE) through a classical channel. According to the syndrome, an error-corrected sifted key is shared between the transmitter (ALICE) and the receiver (BOB).

(4) Finally, privacy amplification processing is performed between the transmitter (ALICE) and the receiver (BOB). Privacy amplification is a process in which random numbers (parity calculation bits) are generated within the transmitter (ALICE), and then the transmitter (ALICE) and receiver (BOB) use the parity calculation bits to generate new random numbers (final key) by removing any information that may have leaked during key distribution. An eavesdropper cannot know the final key after privacy amplification unless he knows all of the parity calculation bits.

### <Example of Continuous-variable QKD>

Hereafter, as an example of the one-way QKD transmission system in the multiplexed communication system illustrated in Fig. 1 or Fig. 2, the continuous-variable QKD will be described. Blocks having the same functions as those in the above-described example embodiments will be denoted by the same reference numerals, and the description will be simplified.

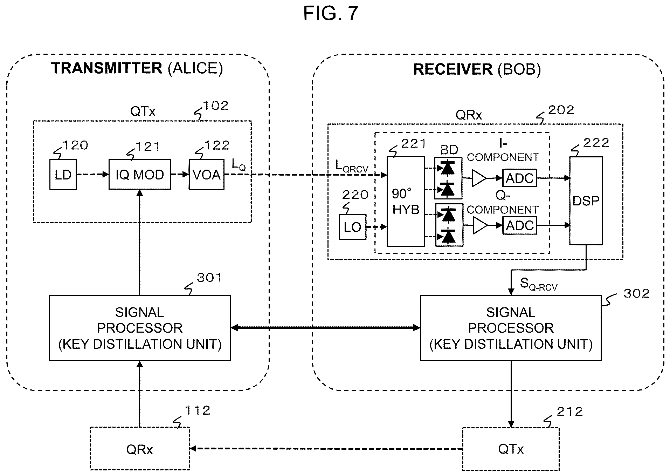

As illustrated in Fig. 7, the continuous-variable QKD system includes a transmitter (ALICE) and a receiver (BOB), which are connected by the first-direction optical transmission line 31 and the second-direction optical transmission line 32, on each of which he quantum channel and the classical channel are wavelength-multiplexed as illustrated in Fig. 1 or Fig. 2.

The transmitter (ALICE) has the quantum unit 102, the signal processor (key distillation unit) 301, and a controller (not shown). The signal processor (key distillation unit) 301 is the key distillation unit (ALICE) 101 in the above example embodiments, but may also include the second-direction key distillation unit (BOB) 111.

The quantum unit 101 of the transmitter (ALICE) includes a laser source 120 , an IQ modulator 121 and a variable attenuator (VOA) 122. Although the IQ modulator 121 is shown in Fig. 7, a dual-polarization IQ modulator may be actually used. The dual-polarization IQ modulator includes an IQ modulator for each of X polarization and Y polarization. Optical signals each IQ-modulated by the IQ modulators are polarization-multiplexed and attenuated to very weak light for transmission. An IQ modulator may be configured by connecting two Mach-Zehnder modulators in parallel.

The signal processor 301 controls the IQ modulator 121 in accordance with the source of a key K0 and the basis A. The IQ modulator 121 IQ-modulates the laser light emitted from the laser light source 120. The variable attenuator 122 attenuates the IQ-modulated laser light to the very weak optical power of 1 photon/bit or less. The very weak light L_{Q} thus obtained is transmitted to the receiver (BOB) through the quantum channel CH1.

The receiver (BOB) has the quantum unit 202, the signal processor (key distillation unit) 302, and a controller (not shown). The signal processor (key distillation unit) 302 is the key distillation unit (BOB) 201 in the above example embodiments, but may also include a second-direction key distillation unit (ALICE) 211.

The quantum unit 202 of the receiver (BOB) includes a local laser light source 220, a 90° hybrid 221, a balanced receiver (BD), an analog-to-digital converter (ADC), and a digital signal processor (DSP) 222. In the case of the above-mentioned dual-polarization IQ modulation system, the very weak light L_{QRCV} arriving through the quantum channel CH1 is polarization-demultiplexed, and a detection module is provided, which includes the 90° hybrid 221, the BD and the ADC for each of X polarization and Y polarization.

The 90° hybrid 221 inputs the very weak light L_{QRCV} and the local laser light LO, and causes them to interfere with each other to extract the I and Q components of the electric field of the very weak light L_{QRCV} (coherent detection). These I and Q components are converted to electrical signals by the BD and sampled by the ADC. The DSP 222 performs the processing such as dispersion compensation, polarization demultiplexing, and equalization on the sampled I and Q components, and outputs received quantization data S_{Q-RCV}.

As described above, the receiving scheme of interfering the very weak light L_{QRCV} with the local laser light LO, is known as coherent detection. In coherent detection, local light of strong optical power is made to interfere with signal light, thereby obtaining optical amplification of the signal light. Accordingly, even if the power of the signal light is very weak such as less than 1 photon/bit, the very weak signal light can be detected using a common photodetector.

In particular, an intradyne scheme is becoming mainstream in digital coherent optical receivers. According to the intradyne scheme, the frequencies of the very weak light L_{QRCV} with the local laser light LO are not made to coincide with each other, but rather a certain degree of offset is allowed. The influence of the beat frequency due to the frequency offset can be compensated for by the DSP 222, which has the advantage that highly accurate wavelength control of the local laser light source 220 is not required.

After the received quantization data S_{Q-RCV} has been obtained as described above, two-way communication is performed between the signal processor 302 and the signal processor 301 through classical channels CH2 and CH4, to generate the final key by the key distillation processing as described above. The following key distillation processing may be implemented by the signal processors 301 and 302 executing programs stored in a program memory of the transmitter (ALICE) and a program memory of the receiver (BOB), respectively.

The configurations and operations of the quantum unit (QTx) 102 and quantum unit (QRx) 202 of the first QKD transmission system described above are similar to those of the quantum unit (QTx) 212 and quantum unit (QRx) 112 of the second QKD transmission system.

As described above, by applying the continuous-variable QKD to the first and second QKD transmission systems, it is possible to utilize techniques and components that are commonly used in long-distance, high-capacity optical communications. Accordingly, a QKD transmission system using the continuous-variable QKD is expected to be less costly than that using the discrete-variable QKD.

Furthermore, as described in the above example embodiments, only two wavelengths are occupied in each of the optical transmission lines 31 and 32. Accordingly, more general communication light signals can be wavelength-multiplexed. Furthermore, a two-way QKD transmission system can be constructed simply by providing light sources for outputting two wavelengths of light and photodetectors for detecting the two wavelengths of light. Therefore, wavelength utilization efficiency can be further improved in two-way WDM communications, and a simplified structure can be achieved.

### 5. Additional statements

Part or all of the above-described illustrative example embodiments can also be described as, but are not limited to, the following additional statements.

### (Additional statement 1)

A multiplexed communication system including a first communication device and a second communication device which are connected by a plurality of optical transmission lines, comprising:
a first optical transmission line for wavelength-multiplexed transmission in a first direction from the first communication device to the second communication device; and a second optical transmission line for wavelength-multiplexed transmission in a second direction from the second communication device to the first communication device,
wherein
the first communication device performs: first transmission in the first direction; and first two-way communication between the the first communication device and the second communicaiton device, wherein the first two-way communication is related to the first transmission,
the second communication device performs: second transmission in the second direction; and second two-way communication between the the first communication device and the second communicaiton device, wherein the second two-way communication is related to the second transmission,
the first transmission and the second transmission are performed using communication light of a first wavelength on the first optical transmission line and the second optical transmission line, and
the first two-way communication and the second two-way communication are performed using communication light of a wavelength different from the first wavelength on the first optical transmission line and the second optical transmission line.

### (Additional statement 2)

The multiplexed communication system according to claim 1, wherein
the first communication device wavelength-multiplexes a first channel of the first wavelength and a second channel of a second wavelength different from the first wavelength onto the first optical transmission line,
the second communication device wavelength-multiplexes a third channel of the first wavelength and a fourth channel of the second wavelength onto the second optical transmission line,
the first communication device performs the first transmission through the first channel and performs the first two-way communication related to the first transmission through the second and fourth channels,
the second communication device performs the second transmission through the third channel and performs the second two-way communication related to the second transmission through the second and fourth channels,
the first communication device performs multiplexing of first information and second information, wherein the first information is transmitted through the second channel in relation to the first transmission, wherein the second information is transmitted through the second channel in relation to the second transmission, and
the second communication device performs multiplexing of third information and fourth information, wherein the third information is transmitted through the fourth channel in relation to the first transmission, wherein the fourth information is transmitted through the fourth channel in relation to the second transmission.

### (Additional statement 3)

The multiplexed communication system according to additional statement 2, wherein the multiplexing is either packet multiplexing or time-division multiplexing.

### (Additional statement 4)

The multiplexed communication system according to any one of additional statements 1-3, wherein the first communication device and the second communication device generate first shared information by the first two-way communication related to the first transmission; and
the first communication device and the second communication device generate second shared information by the second two-way communication related to the second transmission.

### (Additional statement 5)

The multiplexed communication system according to additional statement 4, wherein each of first source information to be transmitted by the first transmission, second source information to be transmitted by the second transmission, the first shared information, and the second shared information comprises random numbers.

### (Additional statement 6)

The multiplexed communication system according to additional statement 5, wherein the first communication device and the second communication device each transmit the first source information and the second source information, and generate the first shared information and the second shared information based on the first source information and the second source information, according to a quantum key distribution process.

### (Additional statement 7)

The multiplexed communication system according to additional statement 6, wherein each of the first communication device and the second communication device generates the first shared information and the second shared information according to key distillation processing.

### (Additional statement 8)

The multiplexed communication system according to additional statement 2 or 3, wherein
the first communication device includes: a first transmitter connected to the first channel; a second transmitter connected to the second channel; a first receiver connected to the third channel; and a second receiver connected to the fourth channel,
the second communication device includes: a third transmitter connected to the third channel; a fourth transmitter connected to the fourth channel; a third receiver connected to the first channel; and a fourth receiver connected to the second channel,
the first communication device further includes: a first shared information generator that generates the first shared information by the first two-way communication through the second and fourth channels; and a second shared information generator that generates the second shared information by the second two-way communication through the second and fourth channels,
the second communication device further includes: a third shared information generator that performs the first two-way communication with the first shared information generator; and a fourth shared information generator that performs the second two-way communication with the second shared information generator, and
wherein the second transmitter and the second receiver are shared between the first shared information generator and the second shared information generator, wherein the fourth transmitter and the fourth receiver are shared between the third shared information generator and the fourth shared information generator.

### (Additional statement 9)

A communication device in a multiplexed communication system including two communication devices connected by a plurality of optical transmission lines, comprising:
a first transmitter that outputs a source signal of a first wavelength according to source information;
a second transmitter that outputs a first transmission signal of a second wavelength;
a third transmitter that outputs a second transmission signal of a third wavelength;
a wavelength multiplexer that wavelength-multiplexes the source signal , the first transmission signal and the second transmission signal onto a first optical transmission line to transmit it as a first wavelength multiplexed signal to another communication device;
a wavelength demultiplexer that demultiplexes a second wavelength multiplexed signal received from the another communication device through the first optical transmission line into a received source signal of the first wavelength, a first received signal of the second wavelength, and a second received signal of the third wavelength;
a first receiver that outputs received source information from the received source signal;
a second receiver that outputs first communication information from the first received signal;
a third receiver that outputs second communication information from the second received signal; and
a signal processor configured to perform: first two-way communication of the first communication information related to the source information between the communication device and the another communication device by the second transmitter and the second receiver; and second two-way communication of the second communication information related to the received source information between the communication device and the another communication device by the third transmitter and the third receiver.

### (Additional statement 10)

A communication device in a multiplexed communication system including two communication devices connected by a plurality of optical transmission lines, comprising:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received source information from the received source signal;
a second receiver that outputs communication information from the received signal; and
a signal processor configured to perform: first two-way communication of the first communication information related to the source information between the communication device and the another communication device by the second transmitter and the second receiver; and second two-way communication of the second communication information related to the received source information between the communication device and the another communication device by the third transmitter and the third receiver,
wherein the second transmitter performs multiplexing of first communication information related to the source information and second communication information related to the received source information, to output the transmission signal, and
the second receiver demultiplexes the received signal subjected to the multiplexing into third communication information related to the source information and fourth communication information related to the received source information, which are output as the communication information.

### (Additional statement 11)

The communication device according to additional statement 10, wherein the multiplexing is either packet multiplexing or time-division multiplexing.

### (Additional statement 12)

The communication device according to additional statement 10 or **11,** wherein the signal processor includes:
a first shared information generator that outputs the source information to the first transmitter and generates first shared information by the first two-way communication; and
a second shared information generator that generates second shared information by the second two-way communication based on the received source information input from the first receiver,
wherein the second transmitter and the second receiver are shared between the first shared information generator and the second shared information generator.

### (Additional statement 13)

The communication device according to additional statement 12, wherein each of the source information, the received source information, the first shared information, and the second shared information comprise random numbers.

### (Additional statement 14)

The communication device according to additional statement 12, wherein the first shared information generator and the second shared information generator transmit the source information, receive the received source information from the another communication device, and generate the first shared information and the second shared information by the first two-way communication and the second two-way communication, according to a quantum key distribution process.

### (Additional statement 15)

The communication device according to additional statement 14, wherein each of the first communication device and the second communication device generates the first shared information and the second shared information, according to key distillation processing.

### (Additional statement 16)

A communication method in a multiplexed communication system including a first communication device and a second communication device which are connected by a plurality of optical transmission lines,
wherein a wavelength multiplexed transmission is performed in a first direction from the first communication device to the second communication device through a first optical transmission line, and a wavelength multiplexed transmission is performed in a second direction from the second communication device to the first communication device through a second optical transmission line,
the method comprising:
   at the first communication device, performing: first transmission in the first direction; and first two-way communication between the the first communication device and the second communicaiton device, wherein the first two-way communication is related to the first transmission,
   at the second communication device, performing: second transmission in the second direction; and second two-way communication between the the first communication device and the second communicaiton device, wherein the second two-way communication is related to the second transmission,
   wherein the first transmission and the second transmission are performed using communication light of a first wavelength on the first optical transmission line and the second optical transmission line, and
   the first two-way communication and the second two-way communication are performed using communication light of a wavelength different from the first wavelength on the first optical transmission line and the second optical transmission line.

### (Additional statement 17)

The communication method according to additional statement 16, wherein
the first communication device wavelength-multiplexes a first channel of the first wavelength and a second channel of a second wavelength different from the first wavelength on a first optical transmission line,
the second communication device wavelength-multiplexes a third channel of the first wavelength and a fourth channel of the second wavelength on a second optical transmission line,
the first communication device performs the first transmission through the first channel and performs the first two-way communication related to the first transmission through the second and fourth channels between the first communication device and the second communication device,
the second communication device performs the second transmission through the third channel and performs the second two-way communication related to the second transmission through the second and fourth channels between the first communication device and the second communication device,
the first communication device performs multiplexing of first information and second information, wherein the first information is transmitted through the second channel in relation to the first transmission, wherein the second information is transmitted through the second channel in relation to the second transmission, and
the second communication device performs multiplexing of third information and fourth information, wherein the third information is transmitted through the fourth channel in relation to the first transmission, wherein the fourth information is transmitted through the fourth channel in relation to the second transmission.

### (Additional statement 18)

The communication method according to additional statement 17, wherein the multiplexing is either packet multiplexing or time-division multiplexing.

### (Additional statement 19)

The communication method according to any one of additional statements 16-18, wherein the first communication device and the second communication device generate first shared information by the first two-way communication related to the first transmission; and
the first communication device and the second communication device generate second shared information by the second two-way communication related to the second transmission.

### (Additional statement 20)

The communication method according to additional statement 19, wherein each of first source information to be transmitted by the first transmission, second source information to be transmitted by the second transmission, the first shared information, and the second shared information comprises random numbers.

### (Additional statement 21)

A control method of a communication device in a multiplexed communication system including two communication devices connected by a plurality of optical transmission lines, the communication device including:
a first transmitter that outputs a source signal of a first wavelength according to source information;
a second transmitter that outputs a first transmission signal of a second wavelength;
a third transmitter that outputs a second transmission signal of a third wavelength;
a wavelength multiplexer that wavelength-multiplexes the source signal , the first transmission signal and the second transmission signal onto a first optical transmission line to transmit it as a first wavelength multiplexed signal to another communication device;
a wavelength demultiplexer that demultiplexes a second wavelength multiplexed signal received from the another communication device through the first optical transmission line into a received source signal of the first wavelength, a first received signal of the second wavelength, and a second received signal of the third wavelength;
a first receiver that outputs received source information from the received source signal;
a second receiver that outputs first communication information from the first received signal;
a third receiver that outputs second communication information from the second received signal; and
a signal processor,
the method comprising: by the signal processor,
   performing first two-way communication of the first communication information related to the source information between the communication device and the another communication device by the second transmitter and the second receiver;
   performing second two-way communication of the second communication information related to the received source information between the communication device and the another communication device by the third transmitter and the third receiver.

### (Additional statement 22)

A control method of a communication device in a multiplexed communication system including a pair of communication devices connected by a plurality of optical transmission lines, the communication device including:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received source information from the received source signal;
a second receiver that outputs communication information from the received signal; and
a signal processor for generating shared information,
the method comprising: by the signal processor,
   performing multiplexing of first communication information related to the source information and second communication information related to the received source information, to output it to the second transmitter, and
   inputting multiplexed information from the second receiver and demultiplexing the multiplexed information into third communication information related to the source information and fourth communication information related to the received source information.

### (Additional statement 23)

The control method according to additional statement 22, wherein the multiplexing is either packet multiplexing or time-division multiplexing.

### (Additional statement 24)

The control method according to additional statement 22 or 23, wherein the signal processor includes: a first shared information generator and a second shared information generator, wherein
the first shared information generator outputs the source information to the first transmitter and generates first shared information by the second transmitter and the second receiver transmitting and receiving information for shared information generation based on the source information between the communication device and the another communication device,
the second shared information generator inputs the received source information from the first receiver and generates second shared information by the second transmitter and the second receiver transmitting and receiving information for shared information generation based on the received source information between the communication device and the another communication device.

### (Additional statement 25)

A multiplexed communication system including a first communication device and a second communication device which are connected by a plurality of optical transmission lines,
wherein the first communication device and the second communication device are connected by a first optical transmission line and a second optical transmission line, wherein a first channel of a first wavelength and a second channel of a second wavelength are wavelength-multiplexed on the first optical transmission line in a first direction from the first communication device to the second communication device, and a third channel of the first wavelength and a fourth channel of the second wavelength are wavelength-multiplexed on the second optical transmission line in a second direction from the second communication device to the first communication device,
the first communication device transmits first source information through the first channel, and transmits and receives information for shared information generation through the second channel and the fourth channel to and from the second communication device based on the first source information,
the second communication device transmits second source information through the third channel, and transmits and receives information for shared information generation through the second channel and the fourth channel to and from the first communication device based on the second source information,
the first communication device performs multiplexing of first information and second information to transmit multiplexed information, wherein the first information is transmitted through the second channel based on the first source information, wherein the second information is transmitted through the second channel based on the second source information, and
the second communication device performs multiplexing of third information and fourth information to transmit multiplexed information, wherein the third information is transmitted through the fourth channel based on the first source information, wherein the fourth information is transmitted through the fourth channel based on the second source information.

### (Additional statement 26)

A system for generating shared information between a first communication device and a second communication device which are connected by a plurality of optical transmission lines, comprising:
a first optical transmission line through which an optical signal of a plurality of wavelengths multiplexed is transmitted in a first direction from the first communication device to the second communication device; and a second optical transmission line through which an optical signal of a plurality of wavelengths multiplexed is transmitted in a second direction from the second communication device to the first communication device,
wherein
the first communication device transmits a first source signal of a first wavelength carrying first transmision information to the second communication device through the first optical transmission line, and the second communication device receives the first source signal through the first optical transmission line to generate first received information which is part of the first transmission information,
the second communication device transmits a second source signal of the first wavelength carrying second transmision information to the first communication device through the second optical transmission line, and the first communication device receives the second source signal through the second optical transmission line to generate second received information which is part of the second transmission information,
a first shared information generator of the first commuication device and a second shared information generator of the second communication device transmit and receive a first communication signal of a second wavelength carring information for generating first shared information to and from each other through the first optical transmission line and the second optical transmission line based on the first received information, thereby generating the first shared information, and
the first shared information generator and the second shared information generator of the second communication device transmit and receive a second communication signal of the second wavelength carring information for generating second shared information to and from each other through the first optical transmission line and the second optical transmission line based on the second received information, thereby generating the second shared information,
wherein the first communication signal and the second communicatin signal are multiplexed according to a multiplexing scheme capable of demultiplexing.

### (Additional statement 27)

A communication device in a multiplexed communication system including two communication devices connected by a plurality of optical transmission lines, comprising:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received source information from the received source signal;
a second receiver that outputs communication information from the received signal; and
a signal processor configured to control the second transmitter and the second receiver to transmit and receive information for shared information generation based on the source information and information for shared information generation based on the received information to and from the another communication device,
wherein
the second transmitter multiplexes first information for shared information generation based on the source information and second information for shared information generation based on the received information to output the first communication signal,
the second receiver demultiplexes a received signal which is a multiplexed signal into third information for shared information generation based on the source information and fourth information for shared information generation based on the received information, as communication information.

### (Additional statement 28)

A communication method in a multiplexed communication system including a first communication device and a second communication device which are connected by a plurality of optical transmission lines,
wherein
the first communication device and the second communication device are connected by a first optical transmission line and a second optical transmission line,
the first communication device wavelenght-multiplexes a first channel of a first wavelength and a second channel of a second wavelength on the first optical transmission line in a first direction to the second communication device,
the second communication device wavelenght-multiplexes a third channel of the first wavelength and a fourth channel of the second wavelength on the second optical transmission line in a second direction to the first communication device,
the first communication device transmits first source information through the first channel, and transmits and receives information for shared information generation through the second channel and the fourth channel to and from the second communication device based on the first source information,
the second communication device transmits second source information through the third channel, and transmits and receives information for shared information generation through the second channel and the fourth channel to and from the first communication device based on the second source information,
the first communication device performs multiplexing of first information for shared information generation and second information for shared information generation to transmit multiplexed information, wherein the first information is transmitted through the second channel based on the first source information, wherein the second information is transmitted through the second channel based on the second source information, and
the second communication device performs multiplexing of third information for shared information generation and fourth information for shared information generation to transmit multiplexed information, wherein the third information is transmitted through the fourth channel based on the first source information, wherein the fourth information is transmitted through the fourth channel based on the second source information.

### (Additional statement 29)

A control method of a communication device in a multiplexed communication system including a pair of communication devices connected by a plurality of optical transmission lines, the communication device including:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received information from the received source signal;
a second receiver that outputs communication information from the received signal; and
a signal processor for generating shared information,
the method comprising: by the signal processor,
   performing multiplexing of first information for shared information generation based on the source information and second information for shared information generation based on the received information, to output it to the second transmitter, and
   demultiplexing multiplexed communication information output to the second receiver into third information for shared information generation based on the source information and fourth information for shared information generation based on the received information.

### [INDUSTRIAL APPLICABILITY]

The present invention is applicable to QKD systems that bidirectionally deliver quantum keys.

### [REFERENCE SIGNS LIST]

10, 10a, 10b, 20, 20a, 20b communication device
101 key distillation unit (ALICE)
102 quantum unit
103, 103(1), 103(2) optical transmitter
103.1 multiplexer
103.2 light emitting unit
104, 104a, 104b wavelength multiplexer
111 key distillation unit (BOB)
112 quantum unit
113, 113(1), 113(2) optical receiver
114, 114a wavelength demultiplexer
201 key distillation unit (BOB)
202 quantum unit
203, 203(1), 203(2) optical receiver
203.1 demultiplexer
203.2 photodetector
204, 204a, 204b wavelength demultiplexer
211 key distillation unit (ALICE)
212 quantum unit
213, 213(1), 213(2) optical transmitter
214, 214a, 214b wavelength multiplexer

## Claims

1. A multiplexed communication system including a first communication device and a second communication device which are connected by a plurality of optical transmission lines, comprising:
a first optical transmission line for wavelength-multiplexed transmission in a first direction from the first communication device to the second communication device; and a second optical transmission line for wavelength-multiplexed transmission in a second direction from the second communication device to the first communication device,
wherein
the first communication device performs: first transmission in the first direction; and first two-way communication related to the first transmission between the the first communication device and the second communicaiton device,
the second communication device performs: second transmission in the second direction; and second two-way communication related to the second transmission between the the first communication device and the second communicaiton device,
the first transmission and the second transmission are performed using communication light of a first wavelength on the first optical transmission line and the second optical transmission line, and
the first two-way communication and the second two-way communication are performed using communication light of a wavelength different from the first wavelength on the first optical transmission line and the second optical transmission line.

2. The multiplexed communication system according to claim 1, wherein
the first communication device wavelength-multiplexes a first channel of the first wavelength and a second channel of a second wavelength different from the first wavelength onto the first optical transmission line,
the second communication device wavelength-multiplexes a third channel of the first wavelength and a fourth channel of the second wavelength onto the second optical transmission line,
the first communication device performs the first transmission through the first channel and performs the first two-way communication related to the first transmission through the second and fourth channels,
the second communication device performs the second transmission through the third channel and performs the second two-way communication related to the second transmission through the second and fourth channels,
the first communication device performs multiplexing of first information and second information, wherein the first information is transmitted through the second channel in relation to the first transmission, wherein the second information is transmitted through the second channel in relation to the second transmission, and
the second communication device performs multiplexing of third information and fourth information, wherein the third information is transmitted through the fourth channel in relation to the first transmission, wherein the fourth information is transmitted through the fourth channel in relation to the second transmission.

3. The multiplexed communication system according to claim 2, wherein the multiplexing is either packet multiplexing or time-division multiplexing.

4. A communication device in a multiplexed communication system including two communication devices connected by a plurality of optical transmission lines, comprising:
a first transmitter that outputs a source signal of a first wavelength according to source information;
a second transmitter that outputs a first transmission signal of a second wavelength;
a third transmitter that outputs a second transmission signal of a third wavelength;
a wavelength multiplexer that wavelength-multiplexes the source signal , the first transmission signal and the second transmission signal onto a first optical transmission line to transmit it as a first wavelength multiplexed signal to another communication device;
a wavelength demultiplexer that demultiplexes a second wavelength multiplexed signal received from the another communication device through the first optical transmission line into a received source signal of the first wavelength, a first received signal of the second wavelength, and a second received signal of the third wavelength;
a first receiver that outputs received source information from the received source signal;
a second receiver that outputs first communication information from the first received signal;
a third receiver that outputs second communication information from the second received signal; and
a signal processor configured to perform: first two-way communication of the first communication information related to the source information between the communication device and the another communication device by the second transmitter and the second receiver; and second two-way communication of the second communication information related to the received source information between the communication device and the another communication device by the third transmitter and the third receiver.

5. A communication device in a multiplexed communication system including two communication devices connected by a plurality of optical transmission lines, comprising:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received source information from the received source signal;
a second receiver that outputs communication information from the received signal; and
a signal processor configured to perform: first two-way communication of first communication information related to the source information; and second two-way communication of second communication information related to the received source information, between the communication device and the another communication device through the second transmitter and the second receiver,
wherein the second transmitter performs multiplexing of first communication information related to the source information and second communication information related to the received source information, to output the transmission signal, and
the second receiver demultiplexes the received signal subjected to multiplexing into third communication information related to the source information and fourth communication information related to the received source information, which are output as the communication information.

6. The communication device according to claim 5, wherein the multiplexing is either packet multiplexing or time-division multiplexing.

7. The communication device according to claim 5 or 6, wherein the signal processor includes:
a first shared information generator that outputs the source information to the first transmitter and generates first shared information by the first two-way communication; and
a second shared information generator that generates second shared information by the second two-way communication based on the received source information input from the first receiver,
wherein the second transmitter and the second receiver are shared between the first shared information generator and the second shared information generator.

8. A control method of a communication device in a multiplexed communication system including two communication devices connected by a plurality of optical transmission lines, the communication device including:
a first transmitter that outputs a source signal of a first wavelength according to source information;
a second transmitter that outputs a first transmission signal of a second wavelength;
a third transmitter that outputs a second transmission signal of a third wavelength;
a wavelength multiplexer that wavelength-multiplexes the source signal , the first transmission signal and the second transmission signal onto a first optical transmission line to transmit it as a first wavelength multiplexed signal to another communication device;
a wavelength demultiplexer that demultiplexes a second wavelength multiplexed signal received from the another communication device through the first optical transmission line into a received source signal of the first wavelength, a first received signal of the second wavelength, and a second received signal of the third wavelength;
a first receiver that outputs received source information from the received source signal;
a second receiver that outputs first communication information from the first received signal;
a third receiver that outputs second communication information from the second received signal; and
a signal processor,
the method comprising: by the signal processor,
performing first two-way communication of the first communication information related to the source information between the communication device and the another communication device by the second transmitter and the second receiver;
performing second two-way communication of the second communication information related to the received source information between the communication device and the another communication device by the third transmitter and the third receiver.

9. A control method of a communication device in a multiplexed communication system including a pair of communication devices connected by a plurality of optical transmission lines, the communication device including:
a first transmitter that outputs a source signal of a first wavelength according to source information;
a second transmitter that outputs a transmission signal of a second wavelength;
a wavelength multiplexer that wavelength-multiplexes the source signal and the transmission signal onto a first optical transmission line to transmit it as a first wavelength multiplexed signal to another communication device;
a wavelength demultiplexer that demultiplexes a second wavelength multiplexed signal received from the another communication device through a second optical transmission line into a received source signal of the first wavelength and a received signal of the second wavelength;
a first receiver that outputs received source information from the received source signal;
a second receiver that outputs communication information from the received signal; and
a signal processor for generating shared information,
the method comprising: by the signal processor,
performing multiplexing of first communication information related to the source information and second communication information related to the received source information, to output it to the second transmitter, and
inputting multiplexed information from the second receiver and demultiplexing the multiplexed information into third communication information related to the source information and fourth communication information related to the received source information.

10. The control method according to claim 9, wherein the multiplexing is either packet multiplexing or time-division multiplexing.
